# EUROPÄISCHE PATENTSCHRIFT

(11) **EP 4 045 819 B1**
(45) Veröffentlichungstag und Bekanntmachung des Hinweises auf die Patenterteilung: **20.09.2023**
(21) Anmeldenummer: 20796525.2
(22) Anmeldetag: 19.10.2020
(51) Int. Cl.: F16H 21/14, F16H 21/12, F16C 7/04, F16H 35/00

(54) **ANTRIEBSSYSTEM**
DRIVE SYSTEM
SYSTÈME D'ENTRAÎNEMENT

(30) Priorität: 18.10.2019 DE 102019216106
(43) Veröffentlichungstag der Anmeldung: 24.08.2022
(73) Patentinhaber: Physik Instrumente (PI) GmbH & Co. KG, 76228 Karlsruhe (DE)
(72) Erfinder: EBERT, Michael, 76137 Karlsruhe (DE); RUDOLF, Christian, 76307 Karlsbad (DE); SANDER, Christian, 76228 Karlsruhe (DE)
(74) Vertreter: Grünecker Patent- und Rechtsanwälte PartG mbB
(86) Internationale Anmeldenummer: PCT/EP2020/079357
(87) Internationale Veröffentlichungsnummer: WO 2021/074447

(56) Entgegenhaltungen:
- FR-A- 574 624
- GB-A- 290 686
- US-A- 1 596 332

## Beschreibung

Die vorliegende Erfindung betrifft ein Antriebssystem nach dem Oberbegriff des Anspruchs 1.

Aufgrund von Bauraumanforderungen und Montagegründen, sowie um thermische Einflüsse zu reduzieren, kann ein Energiewandler (z. B. Motor) örtlich getrennt von einer Stellachse angeordnet werden. Diese Forderung erfordert allerdings eine Energieübertragung von einer Antriebs- auf eine Abtriebsseite.

Die Übertragung von Drehmoment von einer Antriebswelle auf eine parallele dazu angeordnete Abtriebswelle mittels Kopplungselementen (z. B. Pleuel) ist aus dem Stand der Technik bekannt. Diesbezüglich sehen beispielsweise die in der US 1 596 332 A, DE 10 2007 035 309 A1, WO 2009/123551 A1 und US 8 925 406 B1 offenbarten Antriebssysteme mehr als ein Kopplungselement zwischen Antriebswelle und Abtriebswelle vor.

Derartige Antriebe neigen allerdings zu einem Verklemmen aufgrund von Montage- und Fertigungstoleranzen der Wellen sowie der Kopplungselemente und deren Befestigung an den Wellen. Daher ist es die Aufgabe der vorliegenden Erfindung, ein Antriebssystem mit einer Antriebs- und einer Abtriebswelle und wenigstens zwei dazwischen geschalteten Kopplungselementen bereitzustellen, bei welchem ein Verklemmen verhindert wird.

Zur Lösung dieser Aufgabe stellt die vorliegende Erfindung das Antriebsystem nach Anspruch 1 bereit.

Aufgrund des elastisch verformbaren Abschnitts des Kopplungselements ist der Abstand der beiden Verbindungsabschnitte des Kopplungselements, über die das Kopplungselement mit den Wellen verbunden ist, flexibel. Da mindestens ein Kopplungselement den elastisch verformbaren Abschnitt aufweist, können Abweichungen in der Ausrichtung der Wellenachsen sowie Längenunterschiede der Kopplungselemente durch elastische Verformung des elastisch verformbaren Abschnitts im Betrieb ausgeglichen werden. Mit dieser Konfiguration kann dennoch eine spielfreie und präzise Übertragung des Drehmoments gewährleistet werden. Darüber hinaus ist das erfindungsgemäße Antriebssystem auch für den Einsatz im Tieftemperaturbereich (bis hin zu kryogenen Temperaturen) und im Ultrahochvakuum geeignet. Durch einen parallel angebauten Motor bleibt das Antriebssystem kompakt. Weiterhin sind die Komponenten des erfindungsgemäßen Antriebssystems günstig im Vergleich zu Zahn- oder Reibrädern, die präzise gefertigt werden müssen und eine genaue Einstellung der Wellenachsen erfordern.

Bevorzugte Ausführungsformen sind Gegenstände der Unteransprüche.

Es kann von Vorteil sein, wenn der elastisch verformbare Abschnitt derart konfiguriert ist, dass aufgrund einer elastischen Verformung des elastisch verformbaren Abschnitts im Betrieb wenigstens ein Teil der Antriebleistung absorbiert wird und der Wirkungsgrad des Antriebssystems im Bereich zwischen 50 und 100 %, vorzugsweise im Bereich zwischen 90 und 95 %, bevorzugt im Bereich zwischen 95 und 99 % liegt und/oder die Drehmomentschwankung zwischen Antriebswelle und Abtriebswelle im Bereich zwischen 0 und 50 %, vorzugsweise im Bereich zwischen 1 und 25 %, bevorzugt im Bereich zwischen 1 und 10 % liegt. Erfindungsgemäße Antriebssysteme, die einen hohen Wirkungsgrad und eine geringe Drehmomentschwankung aufweisen, erfüllen bevorzugt Anforderungen an eine kontinuierlich und vergleichsweise schnell drehende Abtriebswelle, wohingegen ein Antriebssystem mit vergleichsweise niedrigem Wirkungsgrad und hoher Drehmomentschwankung bei Positioniersystemen zum Einsatz kommen kann, in denen die Abtriebswelle in der Regel nur Bruchteile einer Umdrehung ausführt.

Es kann sinnvoll sein, wenn der elastisch verformbare Abschnitt mittig zwischen der Antriebswelle und der Abtriebswelle angeordnet ist. Aufgrund der symmetrischen Anordnung des elastisch verformbaren Abschnitts kann die Elastizität bzw. Flexibilität des Kopplungselements gleichmäßig in beide Richtungen entlang der Längserstreckung des Kopplungselements wirken.

Es kann von Vorteil sein, wenn der elastisch verformbare Abschnitt ein elastisches Element, vorzugsweise in Form einer Feder oder eines Elastomers, aufweist. Durch die Wahl des elastischen Elements kann die Elastizität des elastisch verformbaren Abschnitts gezielt eingestellt werden. Erfindungsgemäß weist der elastisch verformbare Abschnitt ein anderes Material oder einen anderen Querschnitt als ein benachbarter Abschnitt des Kopplungselements auf. Dadurch kann der elastisch verformbare Abschnitt stoffschlüssig in das Kopplungselement integriert werden oder das gesamte Kopplungselement einstückig ausgebildet werden.

Es kann vorteilhaft sein, wenn die Antriebswelle und Abtriebswelle jeweils einen oder mehrere exzentrische Abschnitte aufweisen und jedes Kopplungselement mit dem entsprechenden exzentrischen Abschnitt gekoppelt ist. Über den exzentrischen Abschnitt kann eine einfache und zuverlässige Anbindung des Kopplungselements erreicht werden, indem beispielsweise ein Verbindungsabschnitt am Ende des Kopplungselements den exzentrischen Abschnitt aufnimmt.

Es kann auch von Nutzen sein, wenn jedes Kopplungselement mit einer Stirnfläche der Antriebswelle und/oder einer Stirnfläche der Abtriebswelle gekoppelt ist. Dadurch kann ein freier Zugang auf die Antriebs- bzw. Abtriebswelle entlang ihrer Rotationsachse ermöglicht werden.

Es kann sinnvoll sein, wenn die Kopplungselemente so an der Antriebswelle und der Abtriebswelle angeordnet sind, dass sie vorzugsweise um 60° oder 90° zueinander phasenversetzt sind. Durch diese Anordnung kann eine konstantere bzw. gleichmäßigere Drehmomentübertragung zwischen Antriebswelle und Abtriebswelle erfolgen, wobei eine Singularität im Bewegungsraum vermieden wird.

Es kann sich als nützlich erweisen, wenn die Antriebswelle und die Abtriebswelle elastisch gelagert sind, vorzugsweise in einem gemeinsamen Gehäuse, besonders bevorzugt in einem elastisch verformbaren Gehäuse. Dadurch kann die Gefahr eines Verklemmens des Antriebssystems weiter verringert werden.

Es kann von Vorteil sein, wenn die Abtriebswelle einen Längsschlitz aufweist, der sich entlang der Rotationsachse erstreckt. Der Längsschlitz kann eine optische Faser aufnehmen.

Es kann vorteilhaft sein, wenn die Abtriebswelle eine Klemmvorrichtung im Bereich des Längsschlitzes aufweist, um eine im Längsschlitz angeordnete optische Faser festzuklemmen. Dadurch kann die optische Faser auf der Rotationsachse der Abtriebswelle positioniert und fixiert werden.

Es kann sinnvoll sein, wenn eines der oder beide Kopplungselemente U-förmig ausgebildet ist/sind. Durch den spezifischen Bewegungsraum der U-förmigen Kopplungselemente kann ein Raum in der Umgebung der Wellen frei bleiben, der beispielsweise für die Positionierung der optischen Faser genutzt werden kann.

Es kann sich als praktisch erweisen, wenn die Abtriebswelle um einen Drehwinkel von +/- 135° um die Rotationsachse verstellbar ist. Dadurch kann ein Positioniersystem bereitgestellt werden, dessen Anwendung einen derartigen Drehwinkelbereich erfordert.

Ein weiterer Aspekt der Erfindung betrifft einen Hexapod, umfassend mehrere Beine und wenigstens ein Antriebssystem nach einem der vorangehenden Ausführungsformen, wobei die Abtriebswelle eines der Antriebssysteme mit einem der Beine des Hexapods verbunden ist, um diese durch Betätigung des Antriebssystems zu bewegen.

### Begriffe und Definitionen

Elastisch verformbarer Abschnitt des Kopplungselements

Der elastisch verformbare Abschnitt des Kopplungselements weist zumindest in Längsrichtung des Kopplungselements (Richtung senkrecht zu den Wellenachsen) eine höhere Elastizität und damit einen niedrigeren E-Modul als die übrigen Abschnitte des Kopplungselements auf.

### Kurze Beschreibung der Figuren

Figur 1 zeigt eine schematische Schnittansicht einer ersten Ausführungsform des erfindungsgemäßen Antriebssystems.
Figur 2 zeigt eine perspektivische Ansicht der ersten Ausführungsform des Antriebssystems.
Figur 3 zeigt einen Längsschnitt der ersten Ausführungsform des Antriebssystems.
Figur 4 zeigt eine perspektivische Ansicht einer zweiten Ausführungsform des erfindungsgemäßen Antriebssystems.
Figur 5 zeigt eine Vorderansicht der zweiten Ausführungsform des Antriebssystems.

### Detaillierte Beschreibung der bevorzugten Ausführungsformen

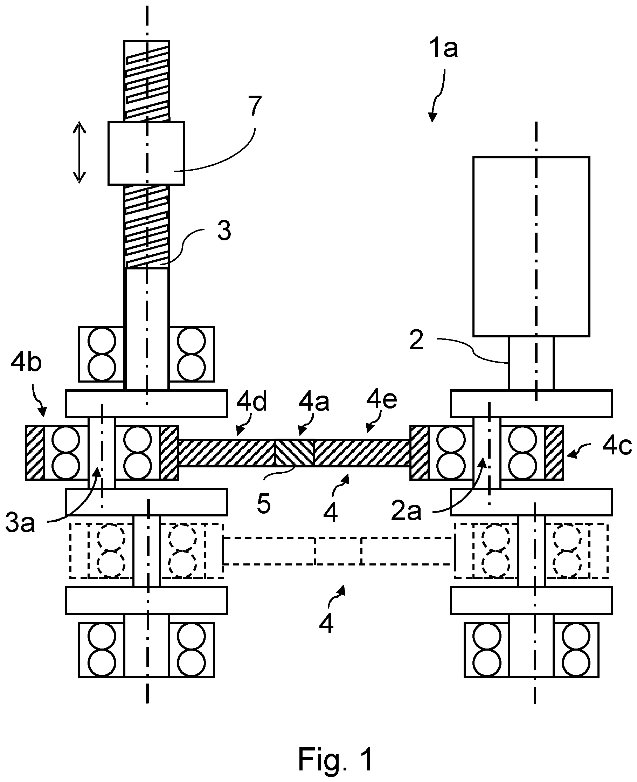

Eine erste Ausführungsform des Antriebssystems 1a ist schematisch in Figur 1 dargestellt. Das Antriebssystem 1a umfasst eine Antriebswelle 2 und eine parallel dazu angeordnete Abtriebswelle 3. Beide Wellen 2, 3 sind über Wälzlager gelagert. Die Lageranordnung sowie die Art der Wälzlager wird hier nicht näher spezifiziert. Es versteht sich von selbst, dass verschiedene Möglichkeiten für die Lageranordnung und die Wahl der Wälzlager existieren, um die Anforderungen an spezifische Anwendungsfälle zu erfüllen. Neben Wälzlagern ist auch der Einsatz von Gleitlagern möglich.

Weiterhin umfasst das Antriebssystem 1a zwei Kopplungselemente 4. Die Zahl der Kopplungselemente ist nicht auf zwei beschränkt. Insbesondere kann das Antriebssystem 1a auch mehr als zwei Kopplungselemente 4 aufweisen. In der vorliegenden Ausführungsform ist jedes Kopplungselement 4 über einen Verbindungsabschnitt 4b, 4c mit einem exzentrischen Abschnitt 2a, 3a der Antriebs- und Abtriebswelle 2, 3 verbunden. Die Verbindung erfolgt dabei vorzugsweise über Wälzlager, wobei ein Außenring des entsprechenden Wälzlagers mit dem Verbindungsabschnitt 4b, 4c des Kopplungselements 4 verbunden ist und ein Innenring mit dem exzentrischen Abschnitt 2a, 3a der Antriebs- bzw. Abtriebswelle 2, 3. Neben weiteren Verbindungsarten ist auch der Einsatz von Gleitlagern anstelle von Wälzlagern möglich. Die exzentrischen Abschnitte 2a, 3a bzw. die Kopplungselemente 4 sind bezüglich der Drehachsen der Antriebs- bzw. Abtriebswelle 2,3 bevorzugt um 60° oder 90° zueinander phasenversetzt angeordnet.

Erfindungsgemäß umfasst wenigstens eines der Kopplungselemente 4 einen elastisch verformbaren Abschnitt 4a. In einem Fall, in dem das Antriebssystem 1a mehr als zwei Kopplungselemente 4 aufweist, umfassen wenigstens so viele Kopplungselemente 4 den elastisch verformbaren Abschnitt 4a, dass die Anzahl der Kopplungselemente 4 mit elastisch verformbaren Abschnitt 4a eins weniger beträgt als die Gesamtanzahl der Kopplungselemente 4. Der elastisch verformbare Abschnitt 4a ist vorzugsweise exakt oder im Wesentlichen mittig zwischen den Verbindungsabschnitten 4b, 4c jedes Kopplungselements 4 bzw. den exzentrischen Abschnitten 2a, 3a der Antriebs- und Abtriebswelle 2, 3 angeordnet. Zwischenabschnitte 4d, 4e des Kopplungselements 4 verbinden jeden Verbindungsabschnitt 4b, 4c mit dem elastisch verformbaren Abschnitt 4a. Der elastisch verformbare Abschnitt 4a kann als elastisches Element 5, beispielsweise in Form eines Elastomers oder einer Feder, ausgebildet sein. Bei den Verbindungsabschnitten 4b, 4c, den Zwischenabschnitten 4d, 4e und dem elastischen Element 5 kann es sich um Einzelteile handeln, die jeweils verschiedene Materialien aufweisen können und zur Herstellung des Kopplungselements 4 vorzugsweise stoffschlüssig gefügt werden. Daneben besteht die Möglichkeit, dass die Verbindungsabschnitte 4b, 4c und die Zwischenabschnitte 4d, 4e einstückig ausgebildet sind und demzufolge auch aus dem gleichen Material bestehen. Weiterhin kann das gesamte Kopplungselement 4 auch in Integralbauweise gefertigt sein. In diesem Fall kann der elastisch verformbare Abschnitt 4a durch einen geringeren Querschnitt als die Zwischenabschnitte 4d, 4e bzw. die Verbindungsabschnitte 4b, 4c des Kopplungselements 4 gekennzeichnet sein.

In allen Ausführungsformen des Kopplungselements 4 sorgt der elastisch verformbare Abschnitt für einen flexiblen Abstand der Verbindungsabschnitte 4b, 4c, wodurch Längenunterschiede der Kopplungselemente 4, Abweichungen in der Parallelität der Wellenachsen und im Allgemeinen Montage- und Fertigungstoleranzen der einzelnen Bestandteile des Antriebssystems 1a ausgeglichen werden und ein Verklemmen des Antriebssystems 1a verhindert wird. Ein Teil der Antriebsleistung wird folglich durch elastische Verformung von dem elastisch verformbaren Abschnitt 4a absorbiert, was den Wirkungsgrad des Antriebssystems 1a beeinflusst und zu Drehmomentschwankungen zwischen Antriebswelle 2 und Abtriebswelle 3 führt.

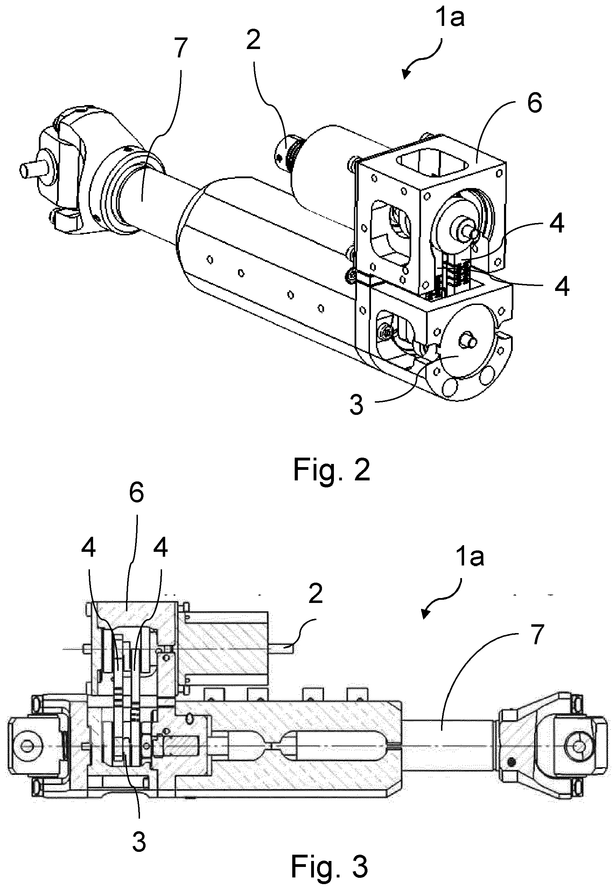

Die Figuren 2 und 3 zeigen in perspektivischer Darstellung und in einem Längsschnitt die erste Ausführungsform des Antriebssystems 1a als Bestandteil eines Hexapods. Insbesondere ist die Abtriebswelle 3 mit einem Stellelement 7 bzw. Bein des Hexapods verbunden, welches konfiguriert ist, eine Linearbewegung aufgrund der Rotation der Abtriebswelle 3 auszuführen. Antriebs- und Abtriebswelle 2, 3 sind in einem gemeinsamen Gehäuse 6 gelagert, das vorzugsweise ebenfalls elastisch ausgebildet ist. Damit kann eine elastische Lagerung der Wellen 2, 3 erreicht werden, die eine zusätzliche Flexibilität in das System einbringt und die Gefahr des Verklemmens weiter verringert.

Im vorliegenden Anwendungsfall ist das Antriebssystem 1a für eine kontinuierliche und schnelle Rotation der Abtriebswelle 3 ausgelegt. Um ein Verklemmen des Antriebssystems 1a zuverlässig zu verhindern, verfügt der elastisch verformbare Abschnitt 4a über ein geeignetes Absorptionsvermögen, wobei der Wirkungsgrad des Antriebssystems 1a bevorzugt jedoch mindestens 95 % beträgt und/oder die Drehmomentschwankung zwischen Antriebswelle 2 und Abtriebswelle 3 nicht größer als 20 % ist.

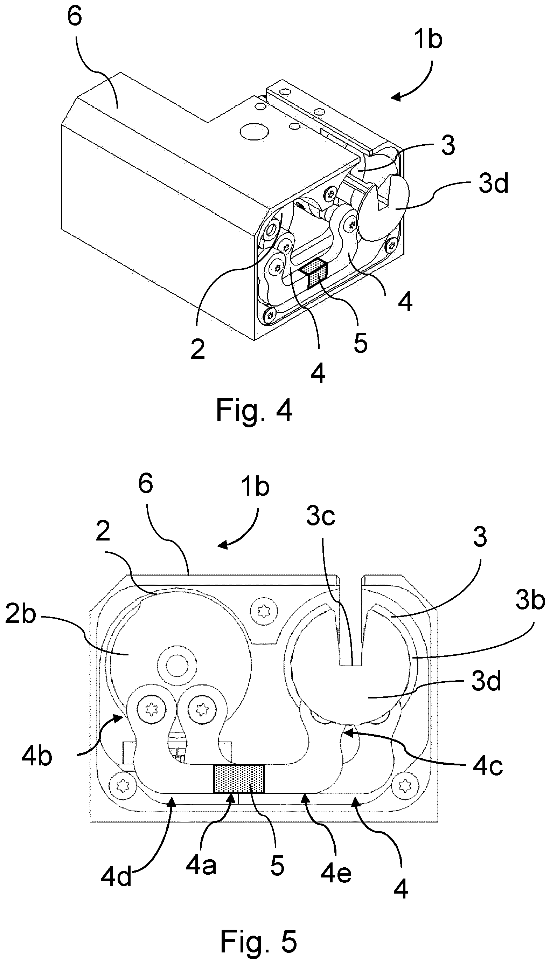

Die Figuren 4 und 5 zeigen eine zweite Ausführungsform des erfindungsgemäßen Antriebssystems 1b. Der wesentliche Unterschied zur ersten Ausführungsform liegt darin, dass die Verbindungsabschnitte 4b, 4c der Kopplungselemente 4 mit Stirnflächen 2b, 3b der Antriebs- und Abtriebswelle 2, 3 verbunden sind, wobei die beiden Kopplungselemente 4 verschiedene Abstände von den jeweiligen Stirnflächen 2b, 3b aufweisen. Insbesondere sind die Kopplungselemente 4 so an den Stirnflächen 2b, 3b der Wellen 2, 3 drehbar befestigt, dass sich ein Kopplungselement 4 über dem anderen Kopplungselement 4, in Bezug auf eine Richtung senkrecht zu den Stirnflächen 2b, 3b der Wellen 2, 3, befindet. Ein Phasenversatz der Kopplungselemente 4 kann auch in der vorliegenden Ausführungsform realisiert sein und beträgt vorzugsweise 60°.

Die möglichen Ausführungsformen des elastisch verformbaren Abschnitts 4a als elastisches Element 5 aus einem spezifischen Material oder einer spezifischen Form oder als Abschnitt mit verringertem Querschnitt sind bereits unter der ersten Ausführungsform des Antriebssystems 1a beschrieben.

Weiterhin ist die Abtriebswelle 3 zur Aufnahme einer optischen Faser mit einem Aufnahmeabschnitt 3d versehen, welcher von der Stirnfläche 3b hervorsteht und in Bezug auf eine Richtung senkrecht zu der Stirnfläche 3b über die Kopplungselemente 4 hinausragt. Die Kopplungselemente 4 sind in dieser Ausführungsform U-förmig ausgebildet, um eine Rotation der Abtriebswelle 3 in beide Richtungen bis zu einem Drehwinkel zu ermöglichen, an dem ein Kopplungselement 4 durch den Aufnahmeabschnitt 3d blockiert wird. Insbesondere ist in der vorliegenden Ausführungsform die Rotation der Abtriebswelle 3 auf einen Drehwinkel von +/- 135° um die Rotationsachse beschränkt. Die Anbringung der Kopplungselemente 4 an den Stirnflächen 2b, 3b der Antriebs- und Abtriebswelle 2, 3 gewährleistet einen freien Zugang auf die Antriebs- bzw. Abtriebswelle 2, 3 entlang ihrer Rotationsachse.

Zur Aufnahme der optischen Faser ist außerdem ein Längsschlitz 3c in der Abtriebswelle 3 ausgebildet, der sich axial bis in den Aufnahmeabschnitt 3d erstreckt und radial bis zur Rotationsachse der Abtriebswelle 3 reicht. Die optische Faser kann mit einer Klemmvorrichtung, die im Längsschlitz 3c der Abtriebswelle 3 und/oder des Aufnahmeabschnitts 3d bereitgestellt ist, auf der Rotationsachse der Abtriebswelle 3 festgeklemmt werden.

Die zweite Ausführungsform des Antriebssystems 1b eignet sich besonders als Positioniersystem für eine optische Glasfaser, deren Polarisationswinkel für die Einkopplung des Lichts durch die Rotation der Faser um ihre Rotationsachse genau eingestellt werden kann. Um ein Verklemmen des Antriebssystems 1b zu verhindern, verfügt auch der elastisch verformbare Abschnitt 4a des Antriebssystems 1b über ein geeignetes Absorptionsvermögen, wobei der Wirkungsgrad des Antriebssystems 1b mindestens 50 % beträgt und/oder die Drehmomentschwankung zwischen Antriebswelle 2 und Abtriebswelle 3 nicht größer als 50 % ist.

### Bezugszeichenliste

- 1a, 1b: Antriebssystem
- 2: Antriebswelle
- 2a: exzentrischer Abschnitt der Antriebswelle
- 2b: Stirnfläche der Antriebswelle
- 3: Abtriebswelle
- 3a: exzentrischer Abschnitt der Abtriebswelle
- 3b: Stirnfläche der Abtriebswelle
- 3c: Längsschlitz der Abtriebswelle
- 3d: Aufnahmeabschnitt der Abtriebswelle
- 4: Kopplungselement
- 4a: elastisch verformbarer Abschnitt
- 4b, 4c: Verbindungsabschnitt
- 4d, 4e: Zwischenabschnitt
- 5: elastisches Element
- 6: Gehäuse
- 7: Stellelement

## Patentansprüche

1. Antriebssystem (1a, 1b) umfassend:
eine Antriebswelle (2),
eine Abtriebswelle (3),
wenigstens zwei Kopplungselemente (4), die jeweils mit der Antriebswelle (2) und der Abtriebswelle (3) gekoppelt sind, wobei
wenigstens ein Kopplungselement (4) einen elastisch verformbaren Abschnitt (4a) aufweist, **dadurch gekennzeichnet, dass** der elastisch verformbare Abschnitt (4a) ein anderes Material aufweist, wobei der elastisch verformbare Abschnitt (4a) stoffschlüssig in das Kopplungselement (4) integriert ist oder einen anderen Querschnitt als ein benachbarter Abschnitt des Kopplungselements (4) aufweist, wobei das gesamte Kopplungselement (4) einstückig ausgebildet ist.

2. Antriebssystem (1a, 1b) nach Anspruch 1, **dadurch gekennzeichnet, dass** der elastisch verformbare Abschnitt (4a) derart konfiguriert ist, sodass aufgrund einer elastischen Verformung des elastisch verformbaren Abschnitts (4a) im Betrieb wenigstens ein Teil der Antriebleistung absorbiert wird und der Wirkungsgrad des Antriebssystems im Bereich zwischen 50 und 100 %, liegt und/oder die Drehmomentschwankung zwischen Antriebswelle (2) und Abtriebswelle (3) im Bereich zwischen 0 und 50 % liegt.

3. Antriebssystem nach Anspruch 1 oder 2, **dadurch gekennzeichnet, dass** der elastisch verformbare Abschnitt (4a) mittig zwischen der Antriebswelle (2) und der Abtriebswelle (3) angeordnet ist.

4. Antriebssystem nach einem der vorangehenden Ansprüche, **dadurch gekennzeichnet, dass** der elastisch verformbare Abschnitt (4a) ein elastisches Element (5), vorzugsweise in Form einer Feder oder eines Elastomers, aufweist.

5. Antriebssystem nach einem der vorangehenden Ansprüche, **dadurch gekennzeichnet, dass** die Antriebswelle (2) und Abtriebswelle (3) jeweils einen oder mehrere exzentrische Abschnitte (2a, 3a) aufweisen und jedes Kopplungselement mit dem entsprechenden exzentrischen Abschnitt (2a, 3a) gekoppelt ist.

6. Antriebssystem nach einem der Ansprüche 1 bis 4, **dadurch gekennzeichnet, dass** jedes Kopplungselement (4) mit einer Stirnfläche (2b) der Antriebswelle (2) und/oder einer Stirnfläche (3b) der Abtriebswelle (3) gekoppelt ist.

7. Antriebssystem nach einem der vorangehenden Ansprüche, **dadurch gekennzeichnet, dass** die Kopplungselemente (4) so an der Antriebswelle (2) und der Abtriebswelle (3) angeordnet sind, dass sie, vorzugsweise um 60° oder 90°, zueinander phasenversetzt sind.

8. Antriebssystem nach einem der vorangehenden Ansprüche, **dadurch gekennzeichnet, dass** die Antriebswelle (2) und die Abtriebswelle (3) elastisch gelagert sind, vorzugsweise in einem gemeinsamen Gehäuse (6), besonders bevorzugt in einem elastisch verformbaren Gehäuse (6).

9. Antriebssystem nach einem der vorangehenden Ansprüche, **dadurch gekennzeichnet, dass** die Abtriebswelle (3) einen Längsschlitz (3c) aufweist, der sich entlang der Rotationsachse erstreckt.

10. Antriebssystem nach dem vorangehenden Anspruch, **dadurch gekennzeichnet, dass** die Abtriebswelle (3) eine Klemmvorrichtung im Bereich des Längsschlitzes (3c) aufweist, um eine im Längsschlitz (3c) angeordnete optische Faser festzuklemmen.

11. Antriebssystem nach einem der vorangehenden Ansprüche, **dadurch gekennzeichnet, dass** eins der oder beide Kopplungselemente (4) U-förmig ausgebildet ist/sind.

12. Antriebssystem nach einem der Ansprüche 9 bis 11, **dadurch gekennzeichnet, dass** die Abtriebswelle (3) um einen Drehwinkel von +/- 135° um die Rotationsachse verstellbar ist.

13. Hexapod, umfassend mehrere Beine und wenigstens ein Antriebssystem nach einem der vorangehenden Ansprüche, **dadurch gekennzeichnet, dass** die Abtriebswelle (3) eines der Antriebssysteme mit einem der Beine des Hexapods verbunden ist, um diese durch Betätigung des Antriebssystems zu bewegen.

## Claims

1. Drive system (1a, 1b) comprising:
an input shaft (2),
an output shaft (3),
at least two coupling elements (4) coupled to the input shaft (2) and the output shaft (3), respectively, wherein
at least one coupling element (4) has an elastically deformable section (4a), **characterized in that** the elastically deformable section (4a) has a different material, wherein the elastically deformable section (4a) is integrated into the coupling element (4) by material bond, or a different cross-section than an adjacent section of the coupling element (4), wherein the entire coupling element (4) is formed as one piece.

2. Drive system (1a, 1b) according to claim 1, **characterized in that** the elastically deformable section (4a) is configured such that due to an elastic deformation of the elastically deformable section (4a) during operation at least part of the drive power is absorbed and the efficiency of the drive system is in the range between 50 and 100 %, and/or the torque fluctuation between input shaft (2) and output shaft (3) is in the range between 0 and 50%.

3. Drive system according to claims 1 or 2, **characterized in that** the elastically deformable section (4a) is arranged centrally between the input shaft (2) and the output shaft (3).

4. Drive system according to one of the preceding claims, **characterized in that** the elastically deformable section (4a) has an elastic element (5), preferably in the form of a spring or an elastomer.

5. Drive system according to one of the preceding claims, **characterized in that** the each of input shaft (2) and output shaft (3) comprises one or more eccentric sections (2a, 3a) and each coupling element is coupled to the corresponding eccentric section (2a, 3a).

6. Drive system according to any one of claims 1 to 4, **characterized in that** each coupling element (4) is coupled to an end face (2b) of the input shaft (2) and/or an end face (3b) of the output shaft (3).

7. Drive system according to one of the preceding claims, **characterized in that** the coupling elements (4) are arranged on the input shaft (2) and the output shaft (3) so as to be out of phase with one another, preferably by 60° or 90°.

8. Drive system according to one of the preceding claims, **characterized in that** the input shaft (2) and the output shaft (3) are mounted elastically, preferably in a common housing (6), particularly preferably in an elastically deformable housing (6).

9. Drive system according to one of the preceding claims, **characterized in that** the output shaft (3) has a longitudinal slot (3c) extending along the axis of rotation.

10. Drive system according to the preceding claim, **characterized in that** the output shaft (3) has a clamping device in the region of the longitudinal slot (3c) for clamping an optical fiber arranged in the longitudinal slot (3c).

11. Drive system according to one of the preceding claims, **characterized in that** at least one coupling elements (4) is U-shaped.

12. Drive system according to any one of claims 9 to 11, **characterized in that** the output shaft (3) is adjustable by a rotation angle of +/- 135° about the rotation axis.

13. Hexapod comprising a plurality of legs and at least one drive system according to one of the preceding claims, **characterized in that** the output shaft (3) of one of the drive systems is connected to one of the legs of the hexapod in order to move them by actuating the drive system.

## Revendications

1. Système d'entraînement (1a, 1b) comprenant :
un arbre d'entraînement (2),
un arbre entraîné (3),
au moins deux éléments d'accouplement (4), accouplés chacun à l'arbre d'entraînement (2) et à l'arbre entraîné (3), dans lequel au moins un élément d'accouplement (4) comporte une section élastiquement déformable (4a),
**caractérisé en ce que** la section élastiquement déformable (4a) comprend un matériau différent, dans lequel la section élastiquement déformable (4a) est solidement intégrée à l'élément d'accouplement (4) ou présente une section transversale différente d'une section adjacente de l'élément d'accouplement (4), dans lequel l'élément d'accouplement (4) est constitué dans son ensemble d'une seule pièce.

2. Système d'entraînement (1a, 1b) selon la revendication 1, **caractérisé en ce que** la section élastiquement déformable (4a) est configurée de telle manière qu'en raison d'une déformation élastique de la section élastiquement déformable (4a) en service, au moins une partie de la puissance d'entraînement est absorbée et le rendement du système d'entraînement est compris entre 50 et 100 %, et/ou la fluctuation de couple entre l'arbre d'entraînement (2) et l'arbre entraîné (3) est comprise entre 0 et 50 %.

3. Système d'entraînement selon la revendication 1 ou 2, **caractérisé en ce que** la section élastiquement déformable (4a) est agencée de manière centrée entre l'arbre d'entraînement (2) et l'arbre entraîné (3).

4. Système d'entraînement selon l'une des revendications précédentes, **caractérisé en ce que** la section élastiquement déformable (4a) comporte un élément élastique (5), de préférence sous la forme d'un ressort ou d'un élastomère.

5. Système d'entraînement selon l'une des revendications précédentes, **caractérisé en ce que** l'arbre d'entraînement (2) et l'arbre entraîné (3) comportent chacun une ou plusieurs sections excentriques (2a, 3a) et chaque élément d'accouplement est couplé à la section excentrique correspondante (2a, 3a).

6. Système d'entraînement selon l'une des revendications 1 à 4, **caractérisé en ce que** chaque élément d'accouplement (4) est couplé à une face avant (2b) de l'arbre d'entraînement (2) et/ou à une face avant (3b) de l'arbre entraîné (3).

7. Système d'entraînement selon l'une des revendications précédentes, **caractérisé en ce que** les éléments d'accouplement (4) sont agencés sur l'arbre d'entraînement (2) et l'arbre entraîné (3) de manière déphasée, de préférence de 60° ou 90°.

8. Système d'entraînement selon l'une des revendications précédentes, **caractérisé en ce que** l'arbre d'entraînement (2) et l'arbre entraîné (3) sont montés élastiquement, de préférence dans un boîtier commun (6), de manière particulièrement préférée dans un boîtier élastiquement déformable (6).

9. Système d'entraînement selon l'une des revendications précédentes, **caractérisé en ce que** l'arbre entraîné (3) comporte une fente longitudinale (3c) qui s'étend le long de l'axe de rotation.

10. Système d'entraînement selon la revendication précédente, **caractérisé en ce que** l'arbre entraîné (3) comporte un dispositif de serrage au niveau de la fente longitudinale (3c) pour bloquer une fibre optique agencée dans la fente longitudinale (3c).

11. Système d'entraînement selon l'une des revendications précédentes, **caractérisé en ce que** l'un des deux ou les deux éléments d'accouplement (4) sont en forme de U.

12. Système d'entraînement selon l'une des revendications 9 à 11, **caractérisé en ce que** l'arbre entraîné (3) est réglable avec un angle de rotation de +/- 135° autour de l'axe de rotation.

13. Hexapode comportant plusieurs pattes et au moins un système d'entraînement selon l'une quelconque des revendications précédentes, **caractérisé en ce que** l'arbre entraîné (3) de l'un des systèmes d'entraînement est connecté à l'une des pattes de l'hexapode pour le déplacer par un actionnement du système d'entraînement.
